# EUROPEAN PATENT APPLICATION

(11) **EP 1 248 464 A2**
(43) Date of publication of application: **09.10.2002**
(21) Application number: 02076311.6
(22) Date of filing: 04.04.2002
(51) Int. Cl.: H04N 7/173

(54) **An interactive response system for digital television systems**

(30) Priority: 06.04.2001 US 281738 P; 31.07.2001 US 917760
(71) Applicant: Comverse Ltd, 69710 Tel-Aviv (IL)
(72) Inventor: Michael, Erez c/o Comverse Ltd.,, 69710 Tel Aviv (IL); Kringel, Shlomi c/o Comverse Ltd.,, 69710 Tel Aviv (IL)
(74) Representative: Jorritsma, Ruurd

(57) **Abstract**

A communication system for a digital television system including an interactive response system (20) in communication with a television (10) of the digital television system (40) is described. The interactive response system (20) is arranged to accept an input from a user in response to an output signal produced by the television (10) and to trigger a communication between the user (60) and a remote third party (70). The communication is dependent upon the output signal produced by the television (10).

## Description

### CROSS-REFERENCE TO RELATED APPLICATIONS.

This application claims the benefit of U.S. Provisional Application No. 60/281,738, filed April 6, 2001. Application 60/281,738 is incorporated herein by reference in its entirety.

### BACKGROUND OF THE INVENTION.

The present invention relates to an interactive response system that is suitable for providing enhanced communication services to digital television users.

The interactive television market is expanding in many directions. In addition to digital television broadcasts, digital television service providers such as cable, satellite and digital terrestrial television now provide services such as home shopping, electronic program guides and electronic information services; limited Internet access; home banking and email, among others.

Whilst the convergence of all these facilities onto a user's television set avoids the inconvenience of having separate appliances for each service and avoids the complexity of having to maintain a home computer that is otherwise required for many of these services, on a practical level, use of these systems is limited by the fact that most digital television systems only provide a basic remote control with a limited number of buttons and controls to interact with the digital television. Therefore, using a digital television to write an email or even access your bank account can be a complicated and unintuitive process. Some digital television service providers now offer a keyboard or similar input device through which a user can operate the services. However, many users do not wish to have another remote control or keyboard cluttering up their house. Furthermore, many potential users are computer-illiterate or reluctant to learn typing skills and the complexities of using such facilities.

The present invention seeks to provide a method and system that offer enhanced communication using a digital television system without the need for complex interface devices or complicated interaction with the television.

### SUMMARY OF THE INVENTION.

According to a first aspect of the present invention, there is provided a communication system for a digital television system including an interactive response system in communication with a television of the digital television system, the interactive response system being arranged to accept an input from a user in response to an output signal produced by the television, the interactive response system then being operative to trigger a communication between the user and a remote third party, wherein the communication is dependent upon the output signal produced by the television.

The output signal produced by the television may be a portion of a television program displayed or otherwise output by the television such as an advertisement. The output signal may also be an image displayed by the television such as an item shown in a television program (for example an object held or worn by an actor), a message or image superimposed over a broadcast displayed by the television or an audio signal output by the television. It will be appreciated that the output signal produced by the television can be any signal, including part or all of a broadcast, that provides a prompt or otherwise indicates to a user that further information is available or that a communication can be triggered upon submission of the input by the user.

The present invention enhances digital television with an interactive response system by offering the ability to initiate communications, such as phone calls, voicemail messages, email messages and requests for further information, among others. Simply by providing an input, such as by pressing a button on a television's remote control, the user is able to initiate a communication that is appropriate to the output signal currently being displayed on the television. For example, if the user is viewing an email message, pressing the button could result in a voicemail system calling a telephone registered to the user, the user is then able to record a voicemail message that is transmitted as an attachment to an email message to the sender of the original email message. In another example, if the user is watching an output signal in the form of a television broadcast advertising a product, pressing the button may initiate a call between the user's telephone and that of a call centre for the product. Other communications may include arrangement of phone calls and conference calls based on entries within an electronic address book displayed as an output signal on the television, reply to voicemail messages output audibly as an output signal by the television either by leaving a further voicemail message or by making a call to the other party, or a request for further information to be sent to the user. The user may request the information to be sent by post, or the user to be contacted by telephone or possibly by email.

The interactive response system may comprise one of a set-top-box, an integrated digital television or a decoder. The interactive response system may comprise at least a portion of a set-top-box operating system. The interactive response system may be downloaded into the set-top-box upon first use of the input by a user. The interactive application can be downloaded from the operator's (digital TV operator) head-end equipment as part of a television program broadcast, an update to the set-top box or as a separate transmission.

The system may further comprise a processing system in communication with the interactive response system, wherein the interactive response system triggers a communication by communicating details of the output signal to the processing system, the processing system being arranged to determine the communication to be triggered in dependence on the signal and to initiate the communication.

The interactive response system may communicate with the processing system via a communication network. The communication network may be a public telephone network. The communication network may be one of a cable system, a digital satellite television system, a digital terrestrial television system or a broadband network television system.

The processing system may be in a location remote to the user and is arranged to serve a plurality of users.

The output signal may represent one of: an email, an electronic address book or a voicemail message.

The remote third party may be a voice recording system arranged to record a voice message as an electronic file, wherein the interactive response system is operative to trigger a telephone call between a telephone associated with the user and the voice recording system for recording of an electronic file, the communication system being arranged to transmit the electronic file as an attachment to an email to the sender of the output signal.

The remote third party may be a telephone associated with the sender of the output signal, wherein the interactive response system is operative to trigger a telephone call between a telephone associated with the user and the telephone associated with the sender of the output signal.

The remote third party may be a voicemail system associated with a sender of the output signal, wherein the interactive response system is operative to trigger a telephone call between a telephone associated with the user and the voicemail system.

The system may further comprise a voice recording system arranged to record voice messages as electronic files, wherein the output signal represents a future date and/or time, the interactive response system being operative to trigger a telephone call between a telephone associated with the user and the voice recording system for recording of an electronic file, the communication system associating the electronic file with the future date and/or time and being arranged to call a telephone associated with the user on the date and/or time and play the electronic file to the user.

The output signal may represent one of: a television broadcast, a banner overlying a television broadcast, a web page or an information page.

The interactive response system may be operative to trigger a telephone call between a telephone associated with the user and a telephone system associated with the signal.

The interactive response system may be operative to transmit a request to the remote third party, the request comprising information on a content of the signal and information on the user, wherein the remote third party uses the information to communicate with the user about the content.

The request may be communicated electronically to a computer system associated with the signal.

The request may be an email to a computer system associated with the output signal.

The remote third party may communicate with the user via a selected one of: email, post or via a telephone call.

According to another aspect of the present invention, there is provided an interactive response method for a digital television system comprising: accepting an input from a user in response to an output signal produced by a television of the digital television system; and triggering a communication between the user and a remote third party, wherein the communication is dependent upon the output signal produced by the television.

The operation of accepting a user input may comprise receiving the input at a set-top-box arranged to communicate with the digital television system.

The step of triggering may comprise: communicating details of the output signal from the set-top-box to a processing system; determining at the processing system the communication to be triggered in dependence on the output signal; and initiating the communication.

The operation of communicating may comprise communicating via one of a communication network, a public service telephone network, a cable system, a digital satellite television system, a digital terrestrial television system, a broadband network or a cellular network (PLMN)

The method may further comprise downloading computer program code corresponding to the interactive response method into the set-top-box upon first use of the input by a user.

The output signal may represent one of: an email, an electronic address book or a voicemail message.

The operation of triggering a communication may comprise: triggering a telephone call between a telephone associated with the user and a voice recording system for recording of an electronic file; and transmitting the electronic file as an attachment to an email to the sender of the output signal.

The operation of triggering a communication may comprise: triggering a telephone call between a telephone associated with the user and a telephone associated with the sender of the output signal.

The operation of triggering a communication may comprise a telephone call between a telephone associated with the user and a voicemail system.

The output signal may represent a future date and/or time, the operation of triggering comprising: triggering a telephone call between a telephone associated with the user and a voice recording system for recording of an electronic file; associating the electronic file with the future date and/or time; and calling a telephone associated with the user on the date and/or time and playing the electronic file to the user.

The output signal may represent one or more of: a television broadcast, a banner overlying a television broadcast, a web page or an information page.

The operation of triggering a communication may comprise: triggering a telephone call between a telephone associated with the user and a telephone system associated with the output signal.

The operation of triggering a communication may comprise: generating a request the request comprising information on a content of the output signal and information on the user, and transmitting the request to the remote third party, wherein the remote third party uses the information to communicate with the user about the content.

The operation of transmitting the request to the remote third party may comprise: communicating the request electronically to a computer system associated with the output signal.

The operation of transmitting the request to the remote third party may comprise: sending the request as an email to a computer system associated with the output signal.

The remote third party communicates with the user via one of: email, post or via a telephone call.

According to another aspect of the present invention, there is provided a computer readable medium, on which is stored a computer program of instructions for a general purpose computer for an interactive response system for a digital television system, comprising, in combination: a module for enabling the computer to accept an input from a user in response to an output signal produced by a television of the digital television system; and a module for enabling the computer to trigger a communication between the user and a remote third party, wherein the communication is dependent upon the output signal produced by the television.

The module for enabling the computer to trigger a communication may comprise: a sub-module for enabling the computer to communicate details of the output signal to a processing system; a sub-module for enabling the processing system to determine the communication to be triggered in dependence on the signal; and a sub-module for enabling the processing system to instigate the communication.

The computer program may further comprise a module for enabling the computer to download a remainder of the computer program upon first use of the input by a user.

### BRIEF DESCRIPTION OF THE DRAWINGS.

Examples of the present invention will now be described, with reference to the accompanying drawings, in which:
Figure 1 is a schematic diagram of a communication system according to a first embodiment of the present invention;
Figure 2 is a schematic diagram of a communication system according a second embodiment of the present invention; and
Figure 3 is a schematic diagram of a communication system according to a third embodiment of the present invention.

### DETAILED DESCRIPTION OF THE PREFERRED EMBODIMENTS.

Prior to describing the preferred embodiments in detail, certain terms will be defined so as to facilitate the description provided herein, and to ensure that the reader can generalize beyond the particularities in this detailed description of the embodiments to envision the broader scope of the invention.

### Definitions

### Computer systems

One embodiment of this system resides in a computer system. Here, the term "computer system" is to be understood to include at least a memory and a processor. In general, the memory will store, at one time or another, at least portions of an executable program code, and the processor will execute one or more of the instructions included in that executable program code. It will be appreciated that the term "executable program code" and the term "software" mean substantially the same thing for the purposes of this description. It is not necessary to the practice of this system that the memory and the processor be physically located in the same place. That is to say, it is foreseen that the processor and the memory might be in different physical pieces of equipment or even in geographically distinct locations.

### Computer program products

The above-identified system may be embodied in a computer program product, as will now be explained.

On a practical level, the software that enables the computer system to perform the operations described further below in detail, may be supplied on any one of a variety of media. Furthermore, the actual implementation of the approach and operations of the system are actually statements written in a programming language. Such programming language statements, when executed by a computer, cause the computer to act in accordance with the particular content of the statements. Furthermore, the software that enables a computer system to act in accordance with the below-described embodiments of the system may be provided in any number of forms including, but not limited to, original source code, assembly code, object code, machine language, compressed or encrypted versions of the foregoing, and any and all equivalents.

One of skill in the art will appreciate that "media", or "computer-readable media", as used here, may include a diskette, a tape, a compact disc, a memory stick, an integrated circuit, a ROM, a CD, a cartridge, a remote transmission via a communications circuit, or any other similar medium useable by computers. For example, to supply software for enabling a computer system to operate in accordance with the principles described herein, the supplier might provide a diskette or might transmit the software in some form via satellite transmission, via a direct telephone link, or via the Internet. Thus, the term, "computer readable medium" is intended to include all of the foregoing and any other medium by which software may be provided to a computer.

Although the enabling software might be "written on" a diskette, "stored in" an integrated circuit, or "carried over" a communications circuit, it will be appreciated that, for the purposes of this application, the software will be referred to as being "on" the computer readable medium. Thus, the term "on" is intended to encompass the above and all equivalent ways, even those hereafter developed, in which software is associated with a computer readable medium.

For the sake of simplicity, therefore, the term "program product" is thus used to refer to a computer useable medium, as defined above, which bears in any form of software to enable a computer system to operate according to the above-identified system.

### Exemplary embodiments.

With the foregoing definitions in mind, exemplary embodiments of the invention will now be described.

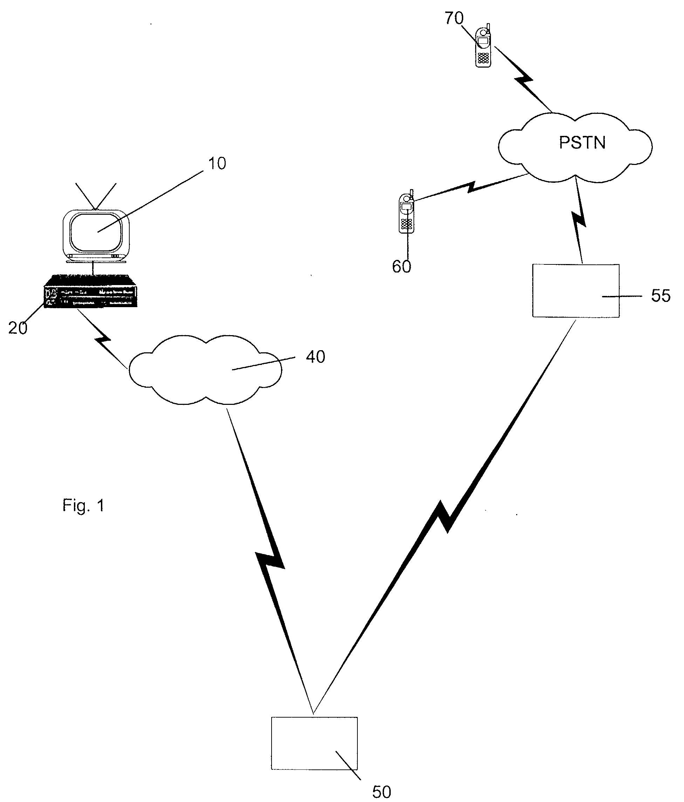

Figure 1 is a schematic diagram of a communication system according to a first embodiment of the present invention. A conventional or digital television set 10 is connected to a set-top-box 20 for receiving digital television services. The set-top-box 20 is configured to communicate via a television network 40 with a processing system 50 at the head end of the television network 40.

In addition to conventional or digital television programs, the set-top-box 20 offers an interactive response system in the form of personalized communication facilities to users. A communication system 55 is arranged to receive communications for the user and to transmit an appropriate signal to the set-top-box 20 via the processing system 50 corresponding to the message for output to the user on the television 10. The communication system 55 operates in the manner of existing telephone switching hardware at a telephone exchange (also known as a central office). However, the communication system 55 includes a detection module that monitors the switching hardware for communications to the user (identified, for example, by telephone number, a particular switch assigned to the user or in some other manner). Upon detection of a communication to the user, the detection module communicates an indication of the communication to the set-top-box 20 via the processing system 50. The detection module may be integrated into the communication system 55 or be connected and perform the monitoring using established protocols such as SS7.

In one example, the communication system 55 may offer voice mail facilities for the user. Where the user's telephone 60 is engaged or unanswered for a predetermined period of time, incoming calls may be redirected to the user's voicemail on the communication system 55. Once a voicemail message has been recorded, the communication system 55 prepares a signal for transmission to the set-top-box 20. The signal includes the voicemail message and a header indicating that the signal is a voicemail message. The signal is transmitted to the set-top-box 20 via the processing system 50 and the television network 40. Upon receiving the signal, the set-top-box 20 decodes the signal, determines the action to take from the header and outputs the voicemail message to the user via the television 10.

Having received the voicemail message, the user is prompted by the set-top-box 20 via the television 10 to reply to the voicemail message. If the user selects to reply to the voicemail message, the set-top-box 20 transmits a signal via the television network 40 to the processing system 50 indicating that the voicemail message is to be replied to. Upon receiving the message, the processing system 50 instructs the communication system 55 to initiate a telephone call between a telephone 60 registered with the user and the telephone number of the caller leaving the voicemail message 70. Typically, the instructions from the communication system 50 cause the communication system 55 to direct commands to a cellular operator switch (SS7 for example). The commands connect the subscriber's telephone number with the caller ID. Once the call is established, the communications system 55 causes the user's telephone 60 to ring via the PSTN. The communication system 55 takes no further part in the process and leaves the user to answer his or her telephone 60 and to take part in the subsequent telephone conversation. Alternatively, the communication system 55 "bridges" the call between the user's telephone 60 and the communication system 55 and the call between the communication system 55 and the caller's telephone 70.

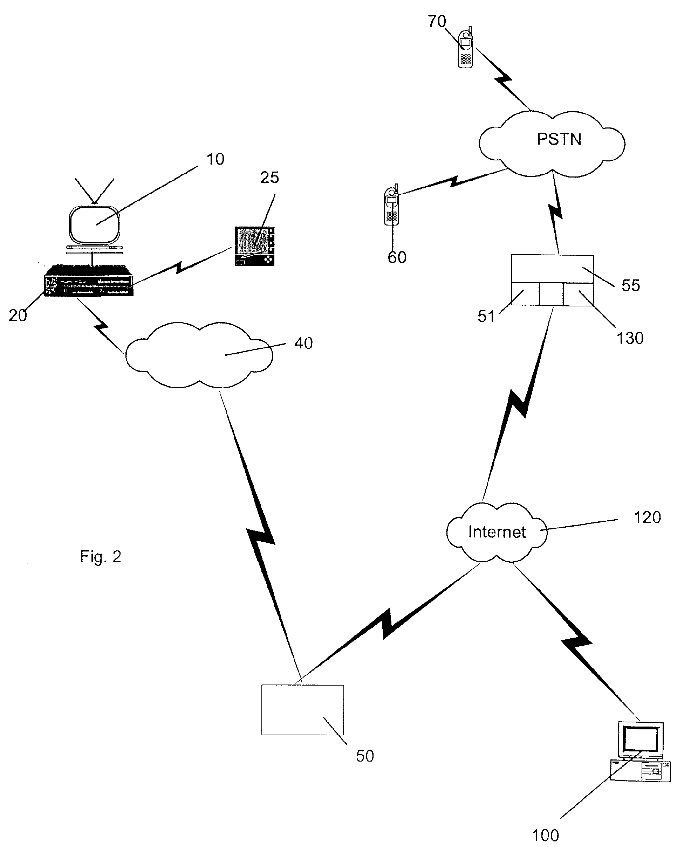

Figure 2 is a schematic diagram of another embodiment of the present invention illustrating selected features in more detail. In this embodiment, the communications network is a digital cable network 40 that connects the set-top-box 20 to the processing system 50. The processing system 50 communicates with the communication system 55 via the Internet 120.

An Internet user 100 sends an email message to a subscriber having an account with the communication system 55. The email message is received over the Internet 120 by an email subsystem 130 of the communication system 55. The email message is transformed into a digital TV signal.

The email message could be binary encoded data transmitted to an application running on the set-top box, the application being programmed to decode the data and to present it on screen. An alternative is that the email message is data encoded in some predetermined format such as MPEG images. Again, received email messages are decoded and displayed on screen. The encoding method is most likely to be selected according to the technical capabilities of the operator. The transformation from an email message to a digital TV signal may include the attachment of an appropriate transmission header and/or footer. The transformation may also include encoding the email message into an predetermined format.

The digital TV signal is then transmitted over the Internet 120 to the processing system 50 and then via the cable network 40 to the set-top-box 20 of the subscriber. Upon receipt of the signal, the set-top-box 20 presents the email message to the subscriber on the TV screen 10. After the subscriber reads the message, he can select to reply to the message by pressing a designated button on his set-top-box remote control 25. When the set-top-box 20 detects a signal transmitted by a remote control 25, due to the pressing of the dedicated button on the remote control 25, the set-top-box 20 transmits a signal to the processing system 50 requesting a reply to the email message. The processing system 50 instructs the communication system 55 to initiate a telephone call between a voice recording system 51 and a telephone 60 registered to the subscriber. The telephone 60 rings and the subscriber can answer it. The voice recording system 51 then allows the subscriber to record a voice message over the telephone 60 in reply to the email. Once the subscriber completes the message he or she hangs up the telephone 60. The communication system 55 then generates a new email message to the sender of the original email message and attaches the subscriber's message as recorded by the voice recording system 51. This email is then transmitted over the Internet 120 to its recipient. When the recipient receives the email, he can open the attachment to hear the voice reply from the subscriber.

The processing system 50 may maintain an address book for subscribers. Within the address book, a subscriber may store email addresses and telephone numbers of friends and contacts. Using the television 10 and the set-top-box 20, a subscriber may access the address book on the processing system 50 to select entries within the address book. Having selected an entry, a subscriber may select to compose a new email in a manner similar to that described with reference to Figure 2 or to connect to a telephone number within the address book in a manner similar to that described with reference to Figure 1. Where both email addresses and telephone numbers are recorded for a person in an address book, a subscriber may select to send an email in reply to a received voicemail message or to be connected to the sender of the email directly via the telephone in response to a received email. Furthermore, where a voicemail caller or an email sender is a subscriber to the same communications system 55 or to a compatible system, a subscriber may select to reply directly to the other person's voicemail account. This will be performed in a manner substantially the same as that described with reference to Figure 1 except that the call would be directed to a voicemail server 51 instead of to the other person's telephone. Conference calls can be established in a similar manner with the user selecting multiple contacts from the address book.

The processing system 50 may offer a subscriber a calendar for use in recording reminders about events. Via the calendar or a similar journal, diary or schedule, a subscriber can select to record a message associated with a time and/or date. The message is then recorded in a manner similar to that described with reference to Figure 2 but is stored within the communications system 55 or processing system 50 until the selected time and/or date is reached at which time the user's telephone 60 is called by the communications system 55 and the message is played to him or her as a reminder of the event.

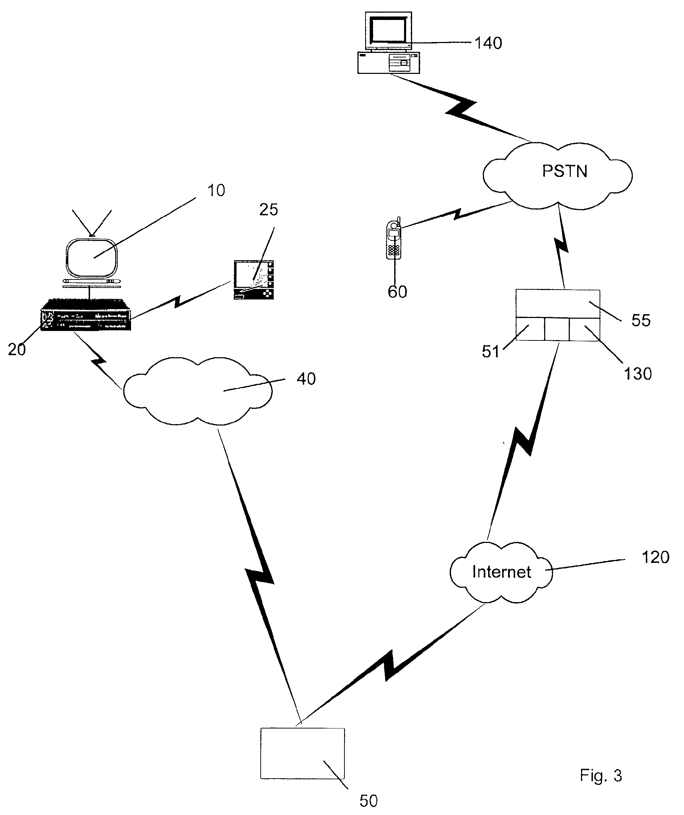

Figure 3 is a schematic diagram of a communication system according to another aspect of the present invention.

Digital television programs including advertisements are received by a user set-top-box 20 and displayed on his television 10. Where a user wishes to receive more information on a product or service within a television program or an advertisement, he presses a predetermined button on the remote control 25 for the set-top-box 20 which transmits a signal to the set-top-box 20. Upon receipt of this signal, the set-top-box 20 alerts the processing system 50 via the television network 40 that further information is required on the product or service in the digital television program or advertisement. Having received the alert, the processing system 50 may instruct the communication system 55 to initiate a call between the user's telephone 60 and a call centre associated with the product or service. Alternatively, the processing system 50 or communication system 55 may arrange for an email detailing the products or service to be sent to the subscriber's email address, for information to be posted to the user's address by regular postal services, or for a call to be made to the user at a selected later time. In this manner, additional or enhanced advertisements and the like can be received via an email message, phone call or other transmission medium such as those described above.

Determination of the product or service that was being displayed on the television at the time the button was pressed by a subscriber may be made based on information encoded within the television signal which is then transmitted with the alert by the set-top-box 20. For example, it is known for additional information and advertisements to be overlaid by a set-top-box 20 onto the program broadcast. In such a case the set-top-box 20 would know the advert or information that was being displayed at the time the button was pressed and can pass this data on. Alternatively, the set-top-box 20 may transmit a time stamp and a program channel identifying the time and program displayed when the button was pressed. Based on a database on program transmissions and their contents held at the processing system 50, the further data to be sent or action to be taken can be identified.

It will be appreciated that the concepts of the present invention could also the applied to services such as enhancements to Directory Enquiries and Yellow Page services. Furthermore, the request for further information described with reference to Figure 3 may also be extended to connect the subscriber with a purchase department so he may purchase the service or product instead of or in addition to obtaining further information.

Furthermore, the present invention could be applied to a decoder of an integrated digital television or other such communication device instead of a set-top-box. Although the above description and claims refer primarily to set-top-boxes, all described aspects can be interchangeably applied to integrated digital televisions (IDTVs) and other decoders. The present invention could be an add-on to the existing programming of a set-top-box, downloaded from the headend of the television system upon first use. Where communication from a decoder or set-top-box or similar node to the processing system 50 is not possible, for example in digital satellite systems and digital terrestrial television, the communication may be completed by some other communication network such as a PSTN or some other means such as the Internet, GPRS, SMS, radio or the like.

Other uses can be envisaged for triggering a communication based on a signal displayed on a television. Such uses fall within the scope of the presently claimed in invention.

## Claims

1. A communication system for a digital television system including an interactive response system in communication with a television of the digital television system, the interactive response system being arranged to accept an input from a user in response to an output signal produced by the television the interactive response system then being operative to trigger a communication between the user and a remote third party, wherein the communication is dependent upon the output signal produced by the television.

2. A communication system according to claim 1, wherein the interactive response system is one of: a set-top-box, an integrated digital television and a decoder.

3. A communication system according to claim 1, wherein the interactive response system comprises at least a portion of a set-top-box operating system.

4. A communication system according to claim 3, wherein the interactive response system is downloaded into the set-top-box upon first use of the input by a user; and wherein the output signal is produced by a remote control to the set-top box and from the set-top box to a head-end.

5. A communication system according to claim 1, further comprising a processing system in communication with the interactive response system, wherein the interactive response system triggers a communication by communicating details of the output signal to the processing system, the processing system being arranged to determine the communication to be triggered in dependence on the output signal and to initiate the communication.

6. A communication system according to claim 5, wherein the processing system is arranged to determine the mode of communication in dependence on the output signal.

7. A communication system according to claim 5, wherein the processing system is arranged to determine the content of the communication in dependence on the output signal.

8. A communication system according to claim 5, wherein the interactive response system communicates with the processing system via a communication network.

9. A communication system according to claim 8, wherein the communication network is one of a public service telephone network (PSTN), and a cellular network (PLMN).

10. A communication system according to claim 8, wherein the communication network is one of a cable system, a digital satellite television system, a digital terrestrial television system or a broadband network television system.

11. A communication system according to claim 5, wherein the processing system is in a location remote to the user and is arranged to serve a plurality of users.

12. A communication system according to claim 1, wherein the output signal represents one of: an email, an electronic address book, and a voicemail message.

13. A communication system according to claim 12, wherein the remote third party is a voice recording system arranged to record a voice message as an electronic file, wherein the interactive response system is operative to trigger a telephone call between a telephone associated with the user and the voice recording system for recording of an electronic file, the communication system being arranged to transmit the electronic file as an attachment to an email to the sender of the output signal.

14. A communication system according to claim 12, wherein the remote third party is a telephone associated with the sender of the output signal, wherein the interactive response system is operative to trigger a telephone call between a telephone associated with the user and the telephone associated with the sender of the output signal.

15. A communication system according to claim 12, wherein the remote third party is a voicemail system associated with a sender of the output signal, wherein the interactive response system is operative to trigger a telephone call between a telephone associated with the user and the voicemail system.

16. A communication system according to claim 1, further comprising a voice recording system arranged to record voice messages as electronic files, wherein the output signal represents a future date and/or time, the interactive response system being operative to trigger a telephone call between a telephone associated with the user and the voice recording system for recording of an electronic file, the communication system associating the electronic file with the future date and/or time and being arranged to call a telephone associated with the user on the date and/or time and play the electronic file to the user.

17. A communication system according to claim 1, wherein the output signal represents one of: a television broadcast, a banner overlying a television broadcast, a web page or an information page.

18. A communication system according to claim 17, wherein the interactive response system is operative to trigger a telephone call between a telephone associated with the user and a telephone system associated with the output signal.

19. A communication system according to claim 17, wherein the interactive response system is operative to transmit a request to the remote third party, the request comprising information on a content of the output signal and information on the user, wherein the remote third party uses the information to communicate with the user about the content.

20. A communication system according to claim 19, wherein the request is communicated electronically to a computer system associated with the output signal.

21. A communication system according to claim 19, wherein the request is an email to a computer system associated with the output signal.

22. A communication system according to claim 19, wherein the remote third party communicates with the user via one of: email, post or via a telephone call.

23. An interactive response method for a digital television system, comprising:
accepting an input from a user in response to an output signal produced by a television of the digital television system; and
triggering a communication between the user and a remote third party, wherein the communication is dependent upon the output signal produced by the television.

24. A method according to claim 23, wherein the step of accepting comprises receiving the input at a set-top-box arranged to communicate with the digital television system.

25. A method according to claim 24, wherein the step of triggering comprises:
communicating details of the output signal from the set-top-box to a processing system;
determining at the processing system the communication to be triggered in dependence on the output signal; and
initiating the communication.

26. A method according to claim 25, wherein the step of determining further comprises determining a type of communication in dependence on the output signal.

27. A method according to claim 25, wherein the step of determining further comprises determining content of the communication in dependence on the output signal.

28. A method according to claim 25, wherein the step of communicating comprises communicating via one of a communication network, a public service telephone network, a cable system, a digital satellite television system, a digital terrestrial television system, and a broadband network.

29. A method according to claim 24, further comprising downloading computer program code corresponding to the interactive response method into the set-top-box upon first use of the input by a user.

30. A method according to claim 24, wherein the output signal represents one of: an email, an electronic address book, and a voicemail message.

31. A method according to claim 30, wherein the step of triggering a communication comprises: triggering a telephone call between a telephone associated with the user and a voice recording system for recording of an electronic file; and transmitting the electronic file as an attachment to an email to the sender of the output signal.

32. A method according to claim 30, wherein the step of triggering a communication comprises triggering a telephone call between a telephone associated with the user and a telephone associated with the sender of the output signal.

33. A method according to claim 30, wherein the step of triggering a communication comprises a telephone call between a telephone associated with the user and a voicemail system.

34. A method according to claim 24, wherein the output signal represents a future date and/or time, the step of triggering comprising:
triggering a telephone call between a telephone associated with the user and a voice recording system for recording of an electronic file;
associating the electronic file with the future date and/or time; and
calling a telephone associated with the user on the date and/or time and playing the electronic file to the user.

35. A method according to claim 24, wherein the output signal represents one of: a television broadcast, a banner overlying a television broadcast, a web page, and an information page.

36. A method according to claim 35, wherein the step of triggering a communication comprises triggering a telephone call between a telephone associated with the user and a telephone system associated with the output signal.

37. A method according to claim 35, wherein the step of triggering a communication comprises generating a request the request comprising information on a content of the output signal and information on the user, and transmitting the request to the remote third party, wherein the remote third party uses the information to communicate with the user about the content.

38. A method according to claim 37, wherein the step of transmitting the request to the remote third party comprises communicating the request electronically to a computer system associated with the output signal.

39. A method according to claim 37, wherein the step of transmitting the request to the remote third party comprises sending the request as an email to a computer system associated with the output signal.

40. A method according to claim 37, wherein the remote third party communicates with the user via one of: email, post, and a telephone call.

41. A computer readable medium, on which is stored a computer program of instructions for a general purpose computer for an interactive response system for a digital television system, comprising, in combination:
means for enabling the computer to accept an input from a user in response to an output signal produced by a television of the digital television system; and
means for enabling the computer to trigger a communication between the user and a remote third party, wherein the communication is dependent upon the output signal produced by the television.

42. A computer program according to claim 41, wherein the means for enabling the computer to trigger a communication comprises:
means for enabling the computer to communicate details of the output signal to a processing system;
means for enabling the processing system to determine the communication to be triggered in dependence on the signal; and
means for enabling the processing system to instigate the communication.

43. A computer program according to claim 41, further comprising means for enabling the computer to download a remainder of the computer program upon first use of the input by a user.

44. A computer program according to claim 36, wherein the output signal represents one of: an email, an electronic address book, and a voicemail message.

45. A program storage device readable by a machine and encoding a program of instructions for executing the method steps of claim 23.

46. A computer system adapted to provide an interactive response system comprising:
a processor, and
a memory including software instructions adapted to enable the computer system to perform operations comprising:
accepting an input from a user in response to an output signal produced by a television of a digital television system; and
triggering a communication between the user and a remote third party, wherein the communication is dependent upon the output signal produced by the television.

47. A computer program product for enabling a computer to provide an interactive response system for a digital television system comprising software instructions for enabling the computer to perform predetermined operations, and a computer readable medium bearing the software instructions, the predetermined operations including:
accepting an input from a user in response to an output signal produced by a television of a digital television system; and
triggering a communication between the user and a remote third party, wherein the communication is dependent upon the output signal produced by the television.
